# EUROPEAN PATENT APPLICATION

(11) **EP 4 684 990 A1**
(43) Date of publication of application: **28.01.2026**
(21) Application number: 25191038.6
(22) Date of filing: 22.07.2025
(51) Int. Cl.: B60K 1/00, B60K 11/02

(54) **A BATTERY ELECTRIC DUMP TRUCK**

(30) Priority: 26.07.2024 US 202463676176 P
(71) Applicant: Liebherr Mining Equipment Newport News Co., Newport News VA 23607 (US); Fortescue Zero Limited, Kidlington Oxfordshire OX15 1GB (GB)
(72) Inventor: HAYDEN, Carl, Newport News, VA, 23607 (US); MESSENGER, John, Newport News, VA, 23607 (US); BAILEY, Melania, The Boulevard, Kidlington, OX5 1GB (GB); TORDILLO, Manuel, The Boulevard, Kidlington, OX5 1GB (GB); VESMA, Nathan, The Boulevard, Kidlington, OX5 1GB (GB)
(74) Representative: Lorenz Seidler Gossel Part. mbB

(57) **Abstract**

The present application relates to battery electric dump truck, comprising a frame, a dump body pivotably mounted on the frame, at least one cooling circuit and a power unit comprising at least a battery unit and a thermal conditioning unit attached to each other to form a power unit, the power unit providing electrical energy to at least one electrical propulsion motor of the battery electric dump truck, wherein the thermal conditioning unit comprises at least a first part of the at least one cooling liquid circuit, the cooling circuit comprising valves and connectors for closing off and separating the first part of the cooling liquid circuit of the power unit from a second part of the cooling liquid circuit arranged on the battery electric dump truck, the valves and connectors configured such that the power unit can be de-installed from the battery electric dump truck with the first part of the cooling liquid circuit and/or the second part of the cooling circuit remaining at least partly filled with cooling liquid.

## Description

### BACKGROUND OF THE INVENTION

The present invention relates to a battery electric dump truck and methods related to battery electric dump trucks.

Dump trucks are usually powered by a combustion engine, such as a Diesel engine. In most applications, the Diesel engine will drive a generator, which in turn will drive electric propulsion motors for driving the dump truck. An example of such a diesel electric dump truck is described in the brochure *T 284 - Liebherr Mining Truck,* LME-11481630-enGB08-2022, Liebherr Mining Equipment Newport News Co.

In order to reduce the environmental load of dump trucks, there have been attempts to power dump trucks using batteries. Battery electric dump trucks and battery electric trucks are know from e.g. from documents CN218505646 U, WO2022036364 A1, US11220167 B2 and US11541739 B2. Document US 2023/0339308 A1 and WO 2023074203 A1 show a dump truck with a hybrid hydrogen fuel cell / battery based power plant.

### BRIEF SUMMARY OF THE INVENTION

An object of the present invention is to provide an improved battery electric dump truck and related methods.

In a first aspect, the present disclosure comprises a battery electric dump truck comprising a frame, a dump body pivotably mounted on the frame, and a power unit comprising a battery, the power unit providing electrical energy to at least one electrical propulsion motor of the battery electric dump truck, wherein the frame comprises two side beams extending in a longitudinal direction of the battery electric dump truck, and an upper bridge member connecting the two side beams in a lateral direction, the upper bridge member comprising side pillars extending upwards from the side beams and an upper cross beam connecting the side pillars. According to the first aspect, the power unit extends between the side beams and below the up-per cross beam in the longitudinal direction of the battery electric dump truck. In particular, the power unit may be mounted in the space between the side beams as a one piece construction passing under the cross beam, wherein the cross beam preferably carries the deck.

In a second aspect, the present disclosure comprises a battery electric dump truck comprising a frame, a dump body pivotably mounted on the frame, and a power unit comprising a battery, the power unit providing electrical energy to at least one electrical propulsion motor of the battery electric dump truck, wherein the frame comprises two side beams extending in a longitudinal direction of the battery electric dump truck, wherein the power unit extends between the side beams and is mounted on cantilevered mounts projecting from inner side walls of the side beams.

In a third aspect, the present disclosure comprises a battery electric dump truck comprising a frame, a dump body pivotably mounted on the frame, a battery unit, a thermal conditioning unit and/or a power distribution cabinet attached to each other to form a power unit, the power unit providing electrical energy to at least one electrical propulsion motor of the battery electric dump truck, wherein the power unit is mounted to the frame as an integral building block. In particular, the power unit is mounted to the frame as a one piece construction comprising the battery unit, the thermal conditioning unit and the power distribution cabinet.

In a fourth aspect, the present disclosure comprises a battery electric dump truck comprising a frame, a dump body pivotably mounted on the frame, a power unit comprising a battery, the power unit providing electrical energy to at least one electrical propulsion motor of the battery electric dump truck, and a charging interface unit is provided separately from the power unit and connected to the power unit by wiring. In particular, the charging interface unit may provide, with respect to the power unit, a remote, modular and/or side beam mounted electrical grid connection point to bring energy into the batteries of the power unit.

In a fifth aspect, the present disclosure comprises a battery electric dump truck comprising a frame, a dump body pivotably mounted on the frame, a power unit comprising a battery, the power unit providing electrical energy to at least one electrical propulsion motor of the battery electric dump truck, wherein the thermal conditioning unit comprises at least a first part of the cooling liquid circuit, the cooling circuit comprising valves and connectors for closing off and separating the first part of the cooling liquid circuit of the power unit from a second part of the cooling liquid circuit arranged on the battery electric dump truck, the valves and connectors configured such that the power unit can be de-installed from the battery electric dump truck with the first part of the cooling liquid circuit and/or the second part of the cooling circuit remaining at least partly filled with cooling liquid. Therefore, the power system may be removed wet due to the valves, providing a quick changeout time.

In a sixth aspect, the present disclosure comprises a method for installing a power unit to a battery electric dump truck, the battery electric dump truck comprising a frame and a dump body pivotably mounted on the frame, wherein the frame comprises two side beams extending in a longitudinal direction of the battery electric dump truck, and an upper bridge member connecting the two side beams in a lateral direction, the upper bridge member comprising side pillars extending upwards from the side beams and an upper cross beam connecting the side pillars, and the power unit comprising a battery and providing electrical energy to at least one electrical propulsion motor of the battery electric dump truck, the method comprising the step of inserting the power unit from a front side of the battery electric dump truck into an installation space provided between the side beams and below the upper cross beam in the longitudinal direction of the battery electric dump truck.

In a seventh aspect, the present disclosure comprises a method for de-installing a power unit from a battery electric dump truck, the battery electric dump truck comprising a frame and a dump body pivotably mounted on the frame, and the power unit comprising at least a battery unit and a thermal conditioning unit attached to each other to form a power unit, the power unit providing electrical energy to at least one electrical propulsion motor of the battery electric dump truck, the thermal conditioning unit comprising at least a first part of a cooling liquid circuit, the method comprising the steps of closing off and separating the first part of the cooling liquid circuit of the power unit from a second part of the cooling liquid circuit arranged on the battery electric dump truck, and de-installing the power unit from the battery electric dump truck with the first part of the cooling liquid circuit and/or the second part of the cooling circuit remaining at least partly filled with cooling liquid.

The battery electric dump truck of the present disclosure may in particular be used on a mine site, in particular for open mining operations.

The battery electric dump truck of the present disclosure may have a maximum payload of 50 metric tons or more, in particular of 100 metric tons or more, in particular of 200 metric tons or more, in particular of 300 metric tons or more.

The battery electric dump truck of the present disclosure may have a an empty vehicle weight of 50 metric tons or more, in particular of 100 metric tons or more, in particular of 200 metric tons or more.

Embodiments of the present disclosure will now be described with reference to the following drawings.

### BRIEF DESCRIPTION OF THE DRAWINGS

The drawings show:
Fig. 1 a perspective drawing of an embodiment of a battery electric dump truck,
Fig. 2A a perspective drawings of the frame of the embodiment of a battery electric dump truck of Fig. 1,
Fig. 2B a perspective drawing of the frame of the embodiment of a battery electric dump truck of Fig. 1, with the power unit and additional battery units attached to the frame,
Fig. 3 an enlarged perspective view of the power unit and additional battery units shown in Fig. 2B,
Fig. 4 a perspective view of the power unit and additional battery units with a fire extinction system and a charging interface unit,
Fig. 5 an embodiment of the charging interface unit shown in Fig. 4, and
Fig. 6 a perspective view of the power unit and additional battery units with cooling circuits.

### DETAILED DESCRIPTION OF THE INVENTION

In a general aspect, the embodiments of a battery electric dump truck of the present disclosure comprise a frame 10, a dump body 20 pivotably mounted on the frame 10, and a power unit 30 comprising a battery, the power unit 30 providing electrical energy to at least one electrical propulsion motor 4 of the battery electric dump truck.

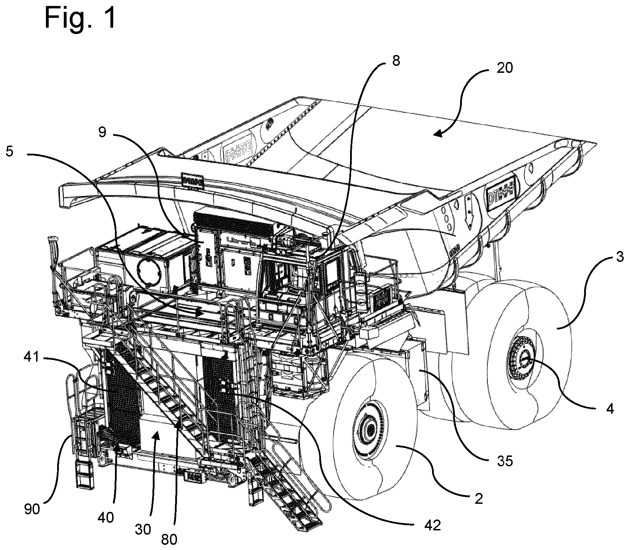

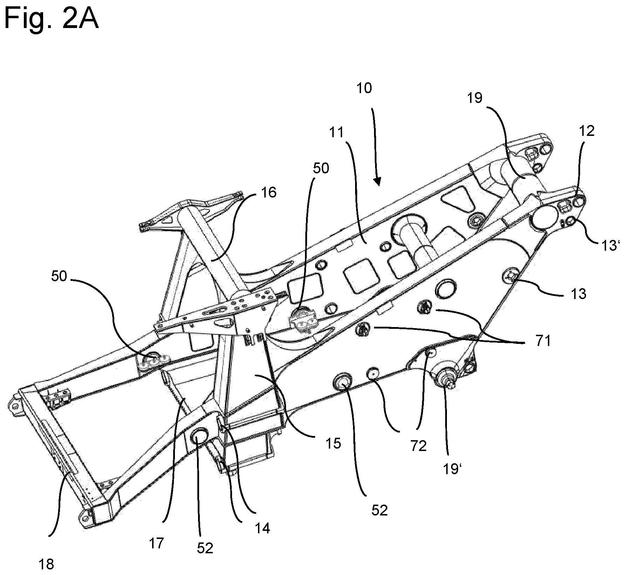

Details of the embodiment of the battery electric dump truck and the frame shown in Fig. 1 and 2A are described in the following. However, the aspects of the present disclosure described in the following may also be implemented with other embodiments of a battery electric dump truck or a frame.

In the embodiment, the frame or chassis 10 is a steel construction formed by welding steel elements to each other. Some of the steel elements may be casted elements, others may be steel plates. The beams of the frame may have, in cross section, a box construction, a T-construction or a H-construction.

In the embodiment, the power unit 30 does not comprise a combustion engine, such that the dump truck is a fully electric dump truck. Further, the batteries of the dump truck may be the only on-board power source of the dump truck. However, the dump truck may additionally comprise a trolley system to provide electrical energy via power lines and the trolley system.

In the embodiment, the power unit 30 comprises a battery unit 33 for powering electric traction motors of the dump truck. The power unit may further comprise a power distribution cabinet 31 and/or a thermal conditioning unit 32.

In the embodiment, the battery electric dump truck shown in Fig. 1 comprises front wheels 2 and rear wheels 3, with at least the rear wheels driven by the propulsion motors 4. The front wheels 2 are steered by a steering system.

On a level above the front wheels 2, the battery electric dump truck comprises a deck 5 carrying an operator cabin 8 and/or a control cabinet 9. Further functional units may be mounted on the deck 5.

In a manual mode, the battery electric dump truck is controlled by an operator from the operator cabin 8, using manual control elements such as a steering wheel, an accelerator pedal and/or a brake pedal for controlling a propulsion system and a steering system of the battery electric dump truck and thereby the speed and the direction of the battery electric dump truck.

The battery electric dump truck may also comprise an autonomous mode, wherein a controller of the battery electric dump truck autonomously controls the propulsion system and a steering system of the battery electric dump truck and thereby the speed and the direction of the battery electric dump truck. For example, the controller may be configured to autonomously control the battery electric dump truck along a mission from a loading site to an unloading site or vice versa. The controller may further be configured to autonomously control the battery electric dump truck to travel to a charging station and autonomously perform a charging operation in collaboration with the charging station. In autonomous mode, the controller of the battery electric dump truck may be in communication with a central mission controller to receive the missions to be performed by the battery electric dump truck.

The controller may comprise a microprocessor and a computer program stored on non-transitory memory, the computer program comprising code that will, when executed on the microprocessor, provide the functionality described above and in the following. The controller may be connected to input devices located in the operator cabin of the dump truck, and may control actuators of the dump truck such as steering actuators and the electric propulsion motors 4 for controlling steering and propulsion.

On a front side of the battery electric dump truck, a radiator unit 40 is provided. Further, in front of the radiator unit 40, a staircase element 80 leads to the deck 5.

As a part of some of the aspects of the present disclosure described more fully in the following, the battery electric dump truck comprises the power unit 30 and, in the embodiment, additional battery units 35 arranged between the front wheels 2 and the rear wheels 3 on the frame 10.

The frame of the battery electric dump truck is shown in Fig. 2A. As a part of some of the aspects of the present disclosure described more fully in the following, the frame of the battery electric dump truck comprises two side beams 11 extending in a longitudinal direction of the battery electric dump truck. In the embodiment, the side beams extend from a front end of the dump truck to a rear end, with the dump body being pivotably mounted to pivot mounts 12 arranged at the rear end of the sides frames.

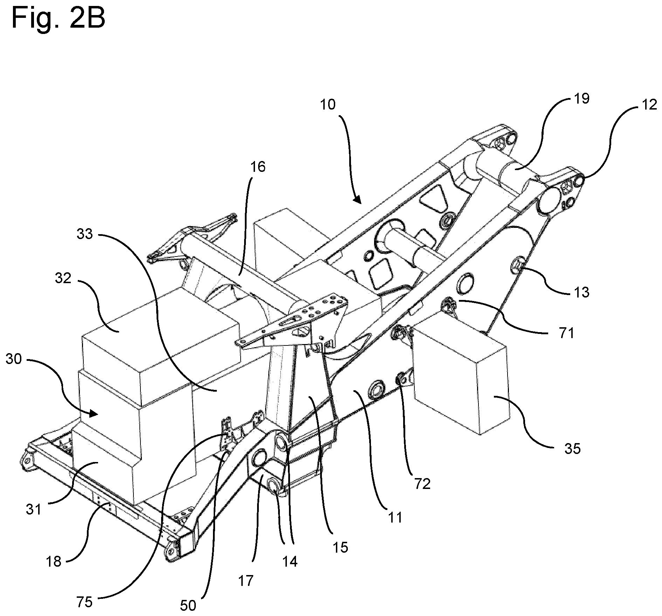

As can be seen from Fig. 2B, as a part of some of the aspects of the present disclosure described more fully in the following, the power unit 30 is arranged between the side beams 11 of the frame.

As a part of some of the aspects of the present disclosure described more fully in the following, the frame of the battery electric dump truck the frame 10 comprises an upper bridge member connecting the two side beams 11 in a lateral direction, the upper bridge member comprising side pillars 15 extending upwards from the side beams 11 and an upper cross beam 16 connecting the side pillars.

Further, in the embodiment, at the same longitudinal position of the frame, the side beams are connected by a lower bridge member formed by a lower extension of the side pillars connected by a lower cross beam 17. The upper bridge member and the lower bridge member therefore together form a frame structure extending in an up-down direction and a lateral direction of the battery electric dump truck.

The deck and the operator cabin are mounted on the upper cross beam 16 of the upper bridge member.

Further, connection points 14 for the suspension system of the front wheels 2 are provided on the pillars 15. A suspension system of the rear wheels is mounted to connection points 13, 13' provided on the side beams 11.

In the embodiment, the side beams 11 are connected in the lateral direction by at least a first rear cross member 19 and a second rear cross member 19'.

In the embodiment, the side beams 11 have, in side view, an essentially triangular shape extending between a front end, the first rear cross member 19 and the second rear cross member 19'. A longer side of the triangular shape is directed to an upper side, a first shorter side is directed to a lower side, and a second shorter side is directed to the rear. The longer side therefore extends upwards in a front-rear direction.

In the embodiment, the first rear cross member 19 is arranged at a rear corner adjacent to the pivot mounts 12 of the dump body and the second rear cross member 19' is arranged at a lower corner of the triangular shape and comprises at its lateral ends pins for carrying the lower ends of dump hoist cylinders for hosting the dump body 20.

In the embodiment, front ends of the side beams 11 are connected by a front cross member 18.

Aspects of the present disclosure, which can be implemented with the embodiment of a battery electric dump truck shown in Fig. 1 and a frame shown in Fig. 2A or other embodiments of a battery electric dump truck are described in the following.

In a first aspect of the present disclosure, as shown in Fig. 2B, the frame 10 comprises two side beams 11 extending in a longitudinal direction of the battery electric dump truck, and an upper bridge member connecting the two side beams 11 in a lateral direction, the upper bridge member comprising side pillars 15 extending upwards from the side beams 11 and an upper cross beam 16 connecting the side pillars 15, wherein the power unit 30 extends between the side beams 11 and below the upper cross beam 16 in the longitudinal direction of the battery electric dump truck. This configuration allows for a simple, stable and compact construction.

In the embodiment, the frame 10 further comprises a lower bridge member connecting the two side beams 11 in a lateral direction and comprising a lower cross beam 17, the upper bridge member and the lower bridge member forming a frame structure, wherein the power unit 30 extends above the lower cross member 17 and below the upper cross member 16 through the frame structure in the longitudinal direction of the battery electric dump truck.

In the embodiment, the power unit 30 comprises a front portion and a rear portion, the rear portion having a first upper surface extending below a level of the upper cross beam 16, and the front portion having an second upper surface extending at a level in front of the upper cross beam 16 and/or above the upper cross beam 16. Thereby, the power unit may have a large volume, while it can still extend below the cross beam 16.

In the embodiment, there is a step portion between the first upper surface and the second upper surface, the step portion extending in front of the upper cross member 16 in an up-down direction.

In the embodiment, the battery unit 33 forms the rear portion and extends below the upper cross beam 16. The thermal conditioning unit 32 forms at least part of the front portion, and in particular at least an upper part of the front portion, and is positioned in front of the cross beam 16. In particular, the thermal conditioning unit 32 is arranged on top of the battery unit 33 and therefore has an upper surface extending above the upper surface of the battery unit 33. A rear surface of the thermal conditioning unit forms the step portion. Below the thermal conditioning unit and in front of the battery unit, the power distribution cabinet 31 is arranged.

In a second aspect of the present disclosure, as shown in Fig. 2A and 2B, the frame 10 comprises two side beams 11 extending in a longitudinal direction of the battery electric dump truck, and the power unit 30 extends between the side beams 11 and is mounted on cantilevered mounts 50 projecting from inner side walls of the side beams 11. Thereby, the power unit can be mounted to the frame by a simple and stable construction, which allows for short mounting and dis-mounting times.

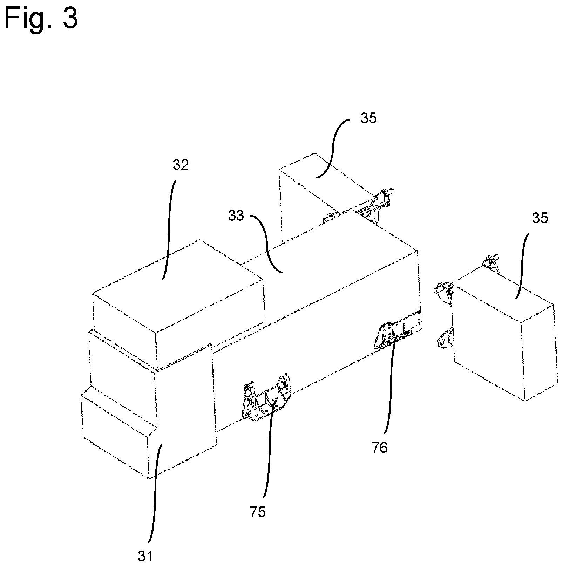

In the embodiment, as also shown in Fig. 3, the power unit 30 comprises side brackets 75, 76 arranged on its lateral sides, the side brackets 75, 76 being connected to the cantilevered mounts 50. In particular, the side brackets 75, 76 may be connected to the cantilevered mounts 50 by bolts and rubber bearings.

In the embodiment, the side brackets 75, 76 have a first plate element connected to the side surfaces of the power unit, and a second plate element extending perpendicular therefrom in a horizontal direction for being connected to the cantilevered mounts 50. In the embodiment, the cantilevered mounts 50 comprise a bearing surface extending horizontally from the inner side walls of the side beams 11 on which the second plate element of the side brackets 75, 76 rests.

In the embodiment, the power unit 30 is mounted on front and rear cantilevered mounts 50 spaced apart in a longitudinal direction of the battery electric dump truck. In the embodiment, the front and rear cantilevered mounts have a different configuration, but they may equally be identical in configuration. The side brackets 75, 76 mounted to the front and rear cantilevered mounts have a different configuration, but they may equally be identical in configuration.

As described above, in the embodiment, the frame 10 comprises an upper bridge member connecting the two side beams in a lateral direction, the upper bridge member comprising side pillars 15 extending upwards from the side beams 11 and an upper cross beam 16 connecting the side pillars, wherein the front cantilevered mounts 50 are arranged in front of the bridge member and the rear cantilevered mounts 50 are arranged at the rear of the bridge member.

In the embodiment, the side brackets 75, 76 are provided on the battery unit 33, such that the thermal conditioning unit 32 and the power distribution cabinet 31 are mounted on the frame only via the battery unit 33.

In the embodiment, the power unit is mounted to the frame 10 only via the side brackets 75, 76 and the cantilevered mounts.

In the embodiment, as described above, the front ends of the side beams are connected by a front cross member 18. In the embodiment, as shown in Fig. 2B, the power unit 30 is arranged at a level above the front cross member 18. Further, the front part of the power unit may be positioned above the front cross member 18.

In a third aspect of the present disclosure, as shown in Fig. 2B and 3, the battery electric dump truck comprises a battery unit 33, a thermal conditioning unit 32 and/or a power distribution cabinet 31 attached to each other to form a power unit 30, the power unit 30 providing electrical energy to at least one electrical propulsion motor of the battery electric dump truck, with the power unit 30 being mounted to the frame 10 as an integral building block. The provision of the power unit as an integral building block allows for a simple and time-efficient mounting and dismounting of the battery unit 33, a thermal conditioning unit 32 and/or a power distribution cabinet 31 as a single unit.

In the embodiment, the frame 10 comprises two side beams 11 extending in a longitudinal direction of the battery electric dump truck, and the power unit 30 extends in a space between the side beams.

In the embodiment, as shown in Fig. 2B and 3, the power distribution cabinet 31 is arranged on a front side of the power unit.

In the embodiment, the power distribution cabinet 31 is accessible from a front side of the battery electric dump truck, as can be seen from Fig. 1. In particular, a front casing element of the power distribution cabinet 31 may form part of the front face of the battery electric dump truck.

Further, the power distribution cabinet 31 may comprise a high voltage isolation switch operable from a front side of the battery electric dump truck.

In the embodiment, as described above, the frame 10 comprises two side beams 11 extending in a longitudinal direction of the battery electric dump truck, and an upper bridge member connecting the two side beams in a lateral direction, the upper bridge member comprising side pillars 15 extending upwards from the side beams and an upper cross beam 16 connecting the side pillars.

In the embodiment, as described above, the power unit extends between the side beams and below the upper cross beam 16 in the longitudinal direction of the battery electric dump truck. Further, the thermal conditioning unit 32 is arranged in front of the cross beam 16 at the level of the cross beam. Further, the battery unit 33 extends below the cross beam 16 to a rear side.

In the embodiment, only the battery unit 33 is directly mounted to the frame, while the thermal conditioning unit 32 and the power distribution cabinet 31 are only mounted to the frame via the battery unit 33.

In the embodiment, the battery unit 33 is arranged at the rear of the power distribution cabinet 31. The thermal conditioning unit 32 is arranged on top of the power distribution cabinet 31 and the battery unit 33. The thermal conditioning unit 32 extends from a front side of the power unit 30 to a position between a front side and a rear side of the battery unit 33 in a longitudinal direction of the battery electric dump truck.

The first, second and third aspect of the present disclosure may be implemented independently from each other with the embodiment of the battery electric dump truck and/or frame described above, or any other battery electric dump truck.

The first, second and third aspect of the present disclosure may also be implemented in any possible combination of the aspects described. In the embodiment, all the aspects are provided in combination. However, combinations of only two aspects are equally comprised by the present disclosure.

In a possible embodiment of any one of the first, second and third aspect of the present disclosure or of any possible combination, the power unit 30 is insertable into the frame 10 from the front side of the battery electric dump truck.

In particular, on installation of the power unit, it may be inserted into the frame from the front side as an integral building block and/or connected to the frame via the brackets 75 and/or cantilevered mounts 50.

In an embodiment, the power unit is insertable and/or removable from or to the front side between the deck 5 and the front cross member 18.

The following aspects of the present disclosure may be implemented independently from or in combination with the first, second and third aspect of the present disclosure or of any possible combination.

According to a fourth aspect of the present disclosure, as shown in Fig. 1, 4 and 5, a charging interface unit 90 is provided separately from the power unit 30 and connected to the power unit by wiring 95. This provides a better access to the charging interface unit 90, as it can be positioned on the battery electric dump truck independently from the power unit at a position that is more easily accessed for charging.

In particular, the charging interface unit 90 may be positioned on the battery electric dump truck such that it can be easily accessed by an autonomous charging station when operating in autonomous mode.

In the embodiment, as can be seen in Fig. 1, the charging interface unit 90 is mounted on the frame 10.

In the embodiment, the charging interface unit 90 is mounted on a front end of the battery electric dump truck. Thereby, the length of the wiring 95 can be reduced.

In the embodiment, the charging interface unit 90 faces outwards in a lateral direction. It is therefore accessible from the side of the battery electric dump truck. Therefore, the battery electric dump truck may drive by a charging station to the charged, rather than having to back out of a charging station after charging in case that the charging connection is provided on the front side.

In the embodiment, the charging interface unit 90 is mounted on an outer side wall of a front end of one of the side beams 11.

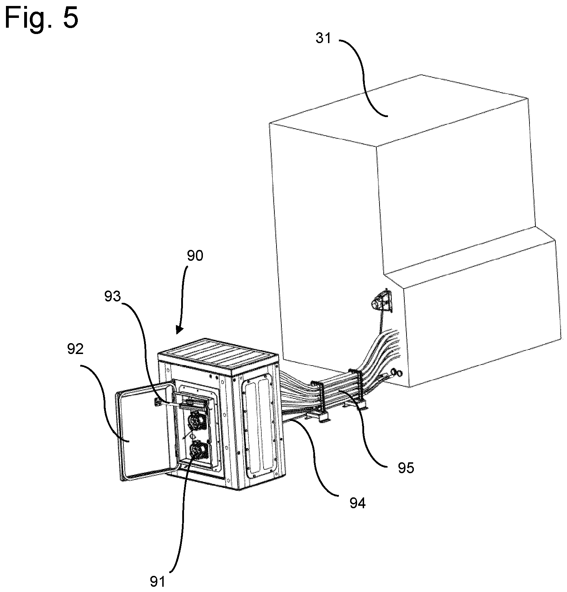

In the embodiment, as shown in Fig. 5, the charging interface unit 90 comprises a hinged door 92 with an automated actuator 93. In an autonomous mode, the controller of the dump truck may therefore autonomously open the hinged door for charging.

In the embodiment, the charging interface unit 90 comprises at least one charging port 91 cooled by a closed loop, self contained cooling circuit of the charging interface unit. The cooling circuit may in particular be a dielectric cooling circuit.

In the embodiment, the dielectric cooling circuit of the charging interface unit is connected by a coolant line 94 and/or a heat exchanger with a coolant circuit of a thermal conditioning unit 32 of the power unit.

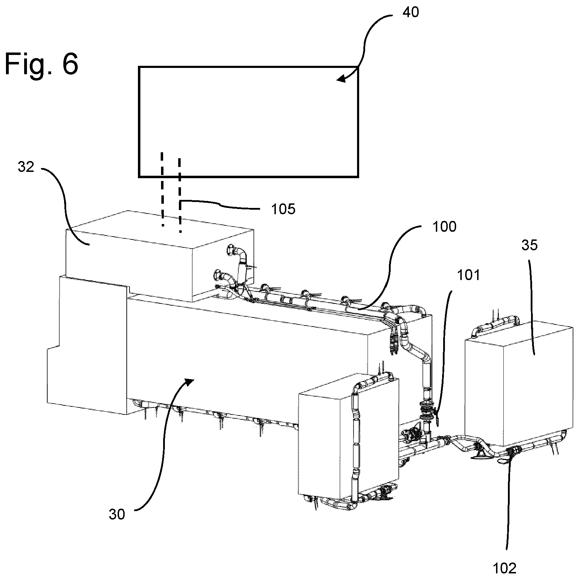

According to a fifth aspect of the present disclosure, as shown in Fig. 6, the battery electric dump truck comprises at least one cooling liquid circuit 100, 105, and the power unit comprises at least a battery unit 33 and a thermal conditioning unit 32 attached to each other to form a power unit 30, the power unit providing electrical energy to at least one electrical propulsion motor of the battery electric dump truck, wherein the thermal conditioning unit 32 comprises at least a first part of the at least one cooling liquid circuit 100, 105. According to the fifth aspect, the cooling circuit 100, 105 comprises valves and connectors 101, 102 for closing off and separating the first part of the cooling liquid circuit of the power unit from a second part of the cooling liquid circuit arranged on the battery electric dump truck, wherein the valves and connectors are configured such that the power unit can be de-installed from the battery electric dump truck with the first part of the cooling liquid circuit and/or the second part of the cooling circuit 100, 105 remaining at least partly filled with cooling liquid. Therefore, the first and/or second part of the cooling circuit does not need to be drained completely for de-installing the power unit, reducing the de-installation time and simplifying de-installation.

In a first variant the embodiment, the cooling circuit 105 connects the thermal conditioning unit 32 with a radiator unit 40 arranged on the battery electric dump truck.

In this variant, the valves and connectors may be configured such that the power unit 30 can be de-installed from the battery electric dump truck with the radiator unit 40 and therefore the second part of the cooling circuit 105 remaining filled with cooling liquid. In contrast, the first part of the cooling circuit 105 inside the thermal conditioning unit 32, which has a lower volume that the first part of the circuit, will be drained.

In a second variant the embodiment, the cooling circuit 100 connects the thermal conditioning unit 32 with an additional battery unit 35 arranged on the battery electric dump truck. In particular, as described above, the additional battery unit 35 may be arranged separately from the power unit 30 at a position between a front and a rear wheel on the frame. The thermal conditioning unit 32 may also control the temperature of the additional battery units 35 via the cooling circuit 100.

In the second variant, the valves and connectors 101, 102 are configured such that the power unit 30 can be de-installed from the battery electric dump truck with the thermal conditioning unit 32 and/or the additional battery unit 35 remaining filled with cooling liquid.

In particular, there are valves and connectors 101 arranged in a part of the cooling circuit connecting the cooling lines arranged on the power unit 30 with the cooling lines arranged on the battery electric dump truck. They may be configured such that on de-installation of the power unit 30, the part of the cooling lines arranged on the power unit 30 and the thermal conditioning unit 32 remain filled with fluid.

Further, the valves and connectors 102 are arranged in a part of the cooling circuit connecting the cooling lines arranged on the additional battery unit 35 with the cooling lines arranged on the battery electric dump truck. They may be configured such that the part of the cooling lines arranged on the additional battery unit 35 can be closed off from the remainder of the cooling lines. Therefore, on de-installation of the power unit 30, the part of the cooling lines arranged on the additional battery unit 35 remain filled with fluid. Further, on de-installation of the additional battery unit 35, the part of the cooling lines arranged on the additional battery unit 35 equally remain filled with fluid. Therefore, only the part of the cooling lines extending between the power unit and the additional battery unit on the battery electric dump truck will have to be drained.

The thermal conditioning unit may provide liquid cooling of the power unit and the additional battery units via the cooling circuit 100. Integrated pumps may circulate the cooling liquid in the cooling circuit. The thermal conditioning unit may comprise a condenser arranged in the cooling circuit 100, which is in turn liquid cooled by via cooling circuit 105 by the radiator unit 40.

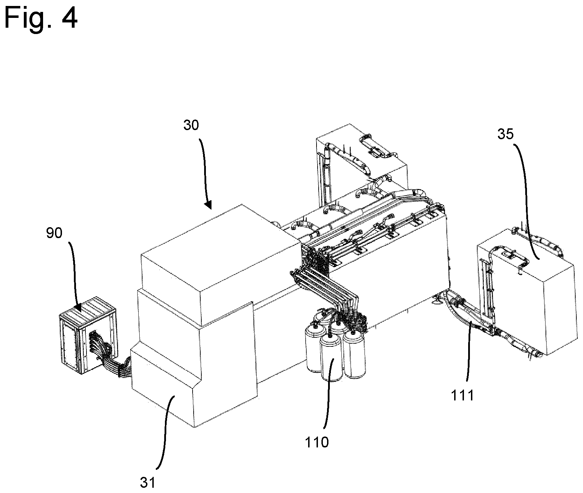

As shown in Fig. 4, in an embodiment according to any one of the preceding aspects and any combination of these aspects, the battery electric dump truck may further comprise a battery fire suppression system. It comprises a suppressant storage tank 110 arranged on the battery electric dump truck, which is connected by suppressant lines 111 with the power unit 30 and the additional battery units 35. The battery fire suppression system may be configured to flood at least parts of the battery unit 33 and/or of the additional battery units 35 in case of fire. Valves are arranged in the suppressant lines to control the flow of suppressant. The suppressant may be a liquid.

In the following, methods according to the present disclosure will be described. These methods are independent from the aspects described above. However, in embodiments of the present disclosure, the methods may be applied to the dump trucks according to the first, second, third, fourth and/or fifth aspect described above.

According to a sixth aspect of the present disclosure, a method for installing a power unit 30 to a battery electric dump truck is provided, the battery electric dump truck comprising a frame and a dump body pivotably mounted on the frame, wherein the frame comprises two side beams extending in a longitudinal direction of the battery electric dump truck, and an upper bridge member connecting the two side beams in a lateral direction, the upper bridge member comprising side pillars extending upwards from the side beams and an upper cross beam connecting the side pillars, and the power unit comprising a battery and providing electrical energy to at least one electrical propulsion motor of the battery electric dump truck. According to the sixth aspect, the method comprises the step of inserting the power unit from a front side of the battery electric dump truck into an installation space provided between the side beams and below the upper cross beam in the longitudinal direction of the battery electric dump truck. This will allow a simple and efficient mounting of the power unit.

The method according to the sixth aspect may in particular be used with a battery electric dump truck according to the first aspect as described above.

In an embodiment, after insertion of the power unit, the power unit may be connected to cantilevered mounts arranged on the inner walls of the side beams of the frame. The method according to the sixth aspect may therefore in particular be used with a battery electric dump truck according to the second aspect as described above.

In an embodiment, for de-installing the power unit 30, the power unit is disconnected from the cantilevered mounts and/or removed towards the front side of the battery electric dump truck.

In an embodiment, the power unit is inserted and/or de-installed from or to the front side by moving the power unit between the deck 5 and the front cross member 18 to or from the installation space between the side beams 11. Therefore, neither the deck 5 nor the front cross member 18 have to be de-installed for installing or de-installing the power unit.

The installation and/or de-installation may be performed as already described above with respect to the various aspects of the battery electric dump truck of the present disclosure.

According to a seventh aspect of the present disclosure, a method for de-installing a power unit 30 from a battery electric dump truck is provided, with the battery electric dump truck comprising a frame and a dump body pivotably mounted on the frame, and the power unit comprising at least a battery unit 33 and a thermal conditioning unit 32 attached to each other to form a power unit 30, the power unit 30 providing electrical energy to at least one electrical propulsion motor of the battery electric dump truck, the thermal conditioning unit 32 comprising at least a first part of a cooling liquid circuit 100, 105. According to the seventh aspect, the method comprises the steps of closing off and separating the first part of the cooling liquid circuit 100, 105 of the power unit from a second part of the cooling liquid circuit arranged on the battery electric dump truck, and de-installing the power unit 30 from the battery electric dump truck with the first part of the cooling liquid circuit 100, 105 and/or the second part of the cooling circuit remaining at least partly filled with cooling liquid.

The method according to the seventh aspects may in particular be performed as described above with respect to the fifth aspect. Further, it may be performed on a battery electric dump truck according to the fifth aspect.

In an embodiment, the method may comprise installing a new power unit 30 by inserting the new power unit and connecting a first part of the cooling liquid circuit of the new power unit and the second part of the cooling circuit arranged on the battery electric dump truck, wherein the first part of the cooling liquid circuit and/or the second part of the cooling circuit is filled with cooling liquid before the step of connecting the first part and the second part.

In particular, the second part of the cooling circuit arranged on the battery electric dump truck may still be filled with coolant.

Further, the first part of the cooling circuit arranged on the power unit may be prefilled before the power unit is installed.

## Claims

1. A battery electric dump truck, comprising
a frame,
a dump body pivotably mounted on the frame,
at least one cooling circuit and
a power unit comprising at least a battery unit and a thermal conditioning unit attached to each other to form a power unit, the power unit providing electrical energy to at least one electrical propulsion motor of the battery electric dump truck,
wherein the thermal conditioning unit comprises at least a first part of the at least one cooling liquid circuit,
the cooling circuit comprising valves and connectors for closing off and separating the first part of the cooling liquid circuit of the power unit from a second part of the cooling liquid circuit arranged on the battery electric dump truck,
the valves and connectors configured such that the power unit can be de-installed from the battery electric dump truck with the first part of the cooling liquid circuit and/or the second part of the cooling circuit remaining at least partly filled with cooling liquid.

2. The battery electric dump truck of claim 1, wherein the cooling circuit connects the thermal conditioning unit with a radiator unit arranged on the battery electric dump truck.

3. The battery electric dump truck of claim 2, wherein the valves and connectors are configured such that the power unit can be de-installed from the battery electric dump truck with the radiator unit remaining filled with cooling liquid.

4. The battery electric dump truck of any one of claims 1 to 3, wherein the cooling circuit connects the thermal conditioning unit with an additional battery unit arranged on the battery electric dump truck.

5. The battery electric dump truck of claim 4, wherein the valves and connectors are configured such that the power unit can be de-installed from the battery electric dump truck with the thermal conditioning unit and/or the additional battery unit remaining filled with cooling liquid.

6. The battery electric dump truck of any one of the preceding claims, wherein the power unit comprises the battery unit, the thermal conditioning unit and a power distribution cabinet attached to each other to form the power unit, wherein the power unit is mounted to the frame as an integral building block.

7. The battery electric dump truck of claim 6, wherein the power distribution cabinet is arranged on a front side of the power unit, wherein the power distribution cabinet is accessible from a front side of the battery electric dump truck and/or comprises a high voltage isolation switch operable from a front side of the battery electric dump.

8. The battery electric dump truck of any one of the preceding claims, wherein the frame comprises two side beams extending in a longitudinal direction of the battery electric dump truck, wherein the power unit extends between the side beams.

9. The battery electric dump truck of claim 8, wherein the frame comprises an upper bridge member connecting the two side beams in a lateral direction, the upper bridge member comprising side pillars extending upwards from the side beams and an upper cross beam connecting the side pillars,
wherein the power unit extends below the upper cross beam in the longitudinal direction of the battery electric dump truck.

10. A method for de-installing a power unit from a battery electric dump truck, in particular from the battery electric dump truck according to any one of the preceding claims,
the battery electric dump truck comprising a frame and a dump body pivotably mounted on the frame, and
the power unit comprising at least a battery unit and a thermal conditioning unit attached to each other to form a power unit, the power unit providing electrical energy to at least one electrical propulsion motor of the battery electric dump truck, the thermal conditioning unit comprising at least a first part of a cooling liquid circuit,
the method comprising the steps of
closing off and separating the first part of the cooling liquid circuit of the power unit from a second part of the cooling liquid circuit arranged on the battery electric dump truck, and
de-installing the power unit from the battery electric dump truck with the first part of the cooling liquid circuit and/or the second part of the cooling circuit remaining at least partly filled with cooling liquid.

11. The method of claim 10, comprising:
installing a new power unit by inserting the new power unit and connecting a first part of the cooling liquid circuit of the new power unit and the second part of the cooling circuit arranged on the battery electric dump truck,
wherein the first part of the cooling liquid circuit and/or the second part of the cooling circuit is filled with cooling liquid before the step of connecting the first part and the second part.
